# EUROPEAN PATENT SPECIFICATION

(11) **EP 1 362 484 B1**
(45) Date of publication and mention of the grant of the patent: **27.12.2006**
(21) Application number: 03703329.7
(22) Date of filing: 12.02.2003
(51) Int. Cl.: H04N 7/24, H04N 7/26, G06F 17/30

(54) **CONSISTENT DIGITAL ITEM ADAPTION FOR MPEG-21 MULTIMEDIA SYSTEMS**
KONSISTENTE ANPASSUNG DIGITALER DATENGRÖSSEN ("DIGITAL ITEM") IN MPEG-21 MULTIMEDIA-SYSTEMEN
ADAPTATION D'ELEMENT NUMERIQUE COHERENT POUR DES SYSTEMES MULTIMEDIA MPEG-21

(30) Priority: 20.02.2002 US 78960
(43) Date of publication of application: 19.11.2003
(73) Proprietor: MITSUBISHI DENKI KABUSHIKI KAISHA, Chiyoda-ku Tokyo 100-8310 (JP)
(72) Inventor: VETRO, Anthony, Cambridge, MA 02138 (US)
(74) Representative: Pfenning, Meinig & Partner GbR
(86) International application number: PCT/JP2003/001435
(87) International publication number: WO 2003/071807

(56) References cited:
- WO-A-99/37048
- US-B1- 6 233 253
- VAN BEEK ET AL.: "Text of ISO/IEC 15938-5/CD Information Technology - Multimedia Content Description Interface - Part 5 Multimedia Description Schemes (partially)" ISO/IEC JTC1/SC29/WG11/N3705 = ISO/IEC CD 15938-5, 17 November 2000 (2000-11-17), pages i,ii,121-137, XP002240767 Geneva, CH cited in the application
- SCHWARTZ T ET AL: "Information Technology - Multimedia Framework - Part 2 Digital Item Declaration. MPEG-21 DIGITAL ITEM DECLARATION FCD" ISO/IEC JTC1/SC29/WG11 N4530 = ISO/IEC FCD 21000-2, 6 December 2001 (2001-12-06), pages I-IX,1-81, XP001058453 Geneva, CH cited in the application
- CIEPLINSKI, L. ET AL.: "Text of ISO/IEC 15938-3/FCD Information Technology - Multimedia Content Description Interface - Part 3 Visual" ISO/IEC JTC1/SC29/WG11/N4062 = ISO/IEC FCD 15938-3:2001(?), 14 March 2001 (2001-03-14), pages 1-93, XP001001412 Singapore cited in the application
- SUN H ET AL: "ARCHITECTURES FOR MPEG COMPRESSED BITSTREAM SCALING" IEEE TRANSACTIONS ON CIRCUITS AND SYSTEMS FOR VIDEO TECHNOLOGY, IEEE INC. NEW YORK, US, vol. 6, no. 2, 1 April 1996 (1996-04-01), pages 191-199, XP000583538 ISSN: 1051-8215 cited in the application

## Description

### TECHNICAL FIELD

This invention relates generally to the field of adapting digital items, and more particularly to the adaptation of digital items with consistent resources and descriptors.

### BACKGROUND ART

Many elements are known for building an infrastructure to create, transmit and receive multimedia content. For example, standards such as MPEG-2 and MPEG-4 play an important role in the efficient broadcast and distribution of audio and video content, see ISO/IEC 13818:1995, "Information Technology - Generic Coding of Moving Pictures and Associated Audio," and " ISO/IEC 14496:1999, "Information Technology - Coding of Audio-Visual Objects," respectively. For transport over IP networks, there exist a variety of specifications defined by the IETF, see for example, "RTP: A Transport Protocol for Real Time Applications," RFC 1889, January 1996 by Schulzrinne, et al., and "RTP Payload Format for MPEG-4 Audio/Visual Streams," RFC 3016, November 2000 by Kikuchi, et al. Furthermore, for the search and retrieval of multimedia contents, MPEG-7 provides a standardized set of descriptors and description schemes, see ISO/IEC 15938:2001, "Information Technology - Multimedia Content Description Interface."

However, currently there is no standard that describes how these elements, either in existence or under development, relate to each other. The primary aim of the emerging MPEG-21 standard, officially referred to as ISO/IEC 21000, "Information Technology - Multimedia Framework," is to describe how these relate to each other. It is expected that the various specifications that exist, or will be developed, will be integrated into a multimedia framework through collaboration between MPEG and other standardization bodies. The overall vision for MPEG-21 is to define a multimedia framework to enable transparent and augmented use of multimedia resources across a wide range of networks and devices.

Within the MPEG-21 framework, the fundamental unit of transaction is referred to as a ***"digital item."*** A digital item is defined as a structured digital object with a standard representation, identification and associated meta-data or descriptors of resources internal to the digital item. Generally, the resources can include multimedia content.

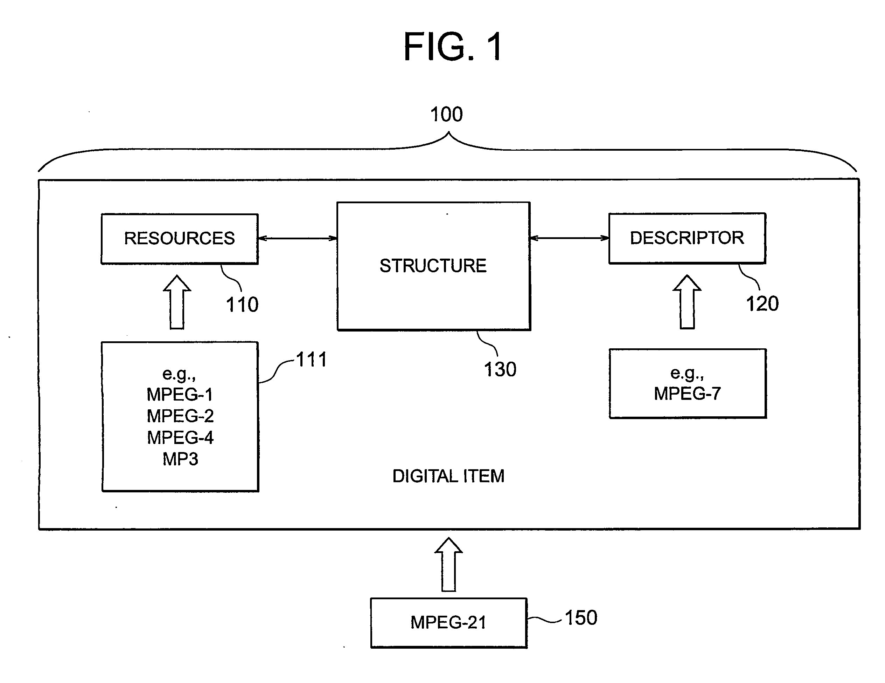

Figure 1 illustrates the concept of a digital item 100, which includes one or more resources 110, associated descriptors 120, and a structure 130. The resources 110 can include individual multimedia assets 111, such as an MPEG video, or an MP3 audio file. The descriptors 120 include descriptive information about the internals of the resources, such as content identification and content-based descriptors, e.g., an MPEG-7 description 121. The structure 130 defines the relationships and associations among the parts in the digital item 100, i.e., the resources and descriptors.

One fundamental advantage of the digital item 100 is that it can aggregate multiple different resources into a single logical unit, or package, with a rich set of descriptive information. Given a collection of media files, this something that existing solutions, e.g., "zip" or "tar files," cannot do. Existing solutions lack structure information and descriptive information, which make large multimedia collections difficult to navigate, distribute, and consume.

A second fundamental advantage of the digital item is that it is self-describing and configurable. For example, consider a digital magazine that contains locale-specific content for playback on various devices. Existing technology forces the content creators to create and manage multiple versions, one version for each device, locale and user preference. Since the digital item has the capability to express options and augmentations for different users, devices and locales, it can be configured to meet specific needs.

To realize the above, MPEG-21 150 has developed a digital item declaration (DID), Part 2 of ISO/IEC 21000, which is scheduled to become an international standard in May 2002. The purpose of the DID is to define the make-up and structure of the digital item 100. An XML-based digital item declaration language (DIDL) has been developed. The DIDL is a generic structure to provide hierarchical and flexible meta-data expression, as well as re-usable and configurable elements.

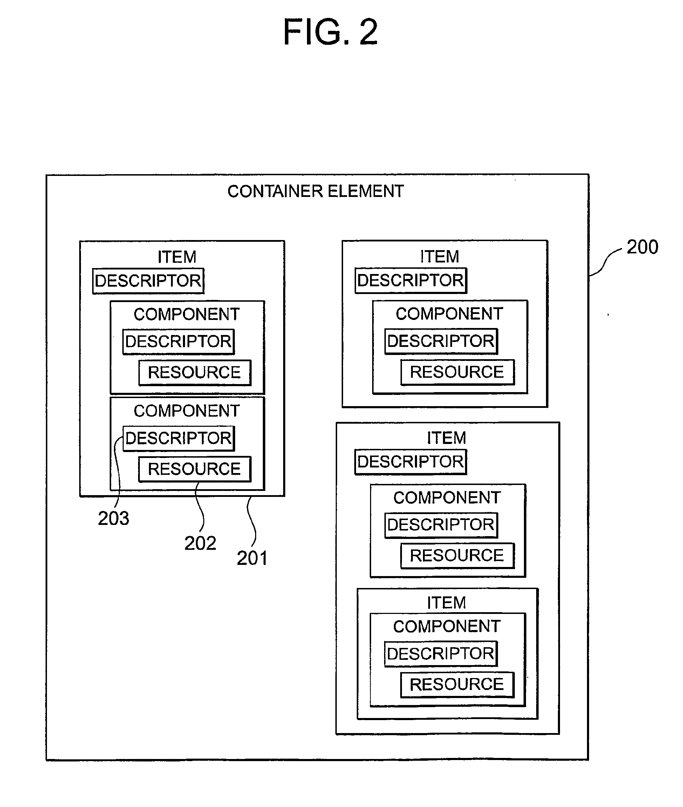

Figure 2 shows the various elements specified as part of the DIDL. A container element 200 allows items 201 and/or containers to be grouped. An item element is a grouping of sub-items and/or components that are bound to relevant descriptors. A component element is a binding of a resource 202 to all of its relevant descriptors 203. A descriptor element 203 associates information with the enclosing component or item. A resource element is an individually identifiable multimedia asset such as a video or audio clip. The statement is a literal textual value that contains information. It contains valid XML documents, which are identified through a namespace.

To allow the digital item to be configured, several additional elements are specified. A choice element describes a set of related selections that can affect the configuration of an item. A condition element describes the enclosing element as being optional, and links it to the selection(s) that affect its inclusion. A selection element describes a specific decision that will affect one or more conditions somewhere within an item. An override element is used to identify a choice or selection that is superseded by the parent of the override.

Digital items can be distributed in two ways. First, the distribution can be across a network. In this way, the DID is distributed along with references to locations on the network from where the resources can be retrieved. Second, the DID can be distributed as a stand-along object, in which case the DID is distributed with its resources.

Regardless of the manner in which digital items are distributed, there are a variety of circumstances and factors of external resources that require the digital items to be adapted. The methods described in this invention address this need.

### DISCLOSURE OF INVENTION

The method according to the invention is defined by the features of claim 1, and the system according to the invention is defined by the features of claim 16.

A method and system adapts a digital item by parsing the digital item into a resource and a description of the resource. The resource is then adapted according to a digital item adaptation description to produce an adapted resource. The descriptor is then modified according to the digital item adaptation description to produce a modified descriptor consistent with the adapted resource. The modified descriptor and the adapted resource are combined to form a modified digital item.

The descriptor is related to the resource internal to the digital item, and the digital item adaptation description is related to resources external to the digital item, and the modified digital item is substantially consistent with the external resources.

### BRIEF DESCRIPTION OF THE DRAWINGS

Figure 1 is a block diagram of a prior art digital item;
Figure 2 is a block diagram of a prior art digital item declaration;
Figure 3 is a block diagram of digital item adaptation according to the invention;
Figure 4 is block diagram of an interface between a resource adaptation engine and a descriptor adaptation engine; and
Figure 5 is flow diagram of an application that uses digital item adaptation according to the invention.

### BEST MODE FOR CARRYING OUT THE INVENTION

### Introduction

Digital items may need to be adapted to external resources, environments, networks, devices, and user preferences when they are distributed over heterogeneous networks. This invention describes the general concept of digital item adaptation. This process involves the consistent adaptation of resources and descriptors that are declared by the digital item.

The invention provides a method and system for adapting digital items so that a consistency is maintained between adapted resources and associated descriptors. That is, descriptors associated with adapted resources should accurately describe the adapted resources, e.g., adapting the resources in terms of bit-rate, output devices, or spatial resolution.

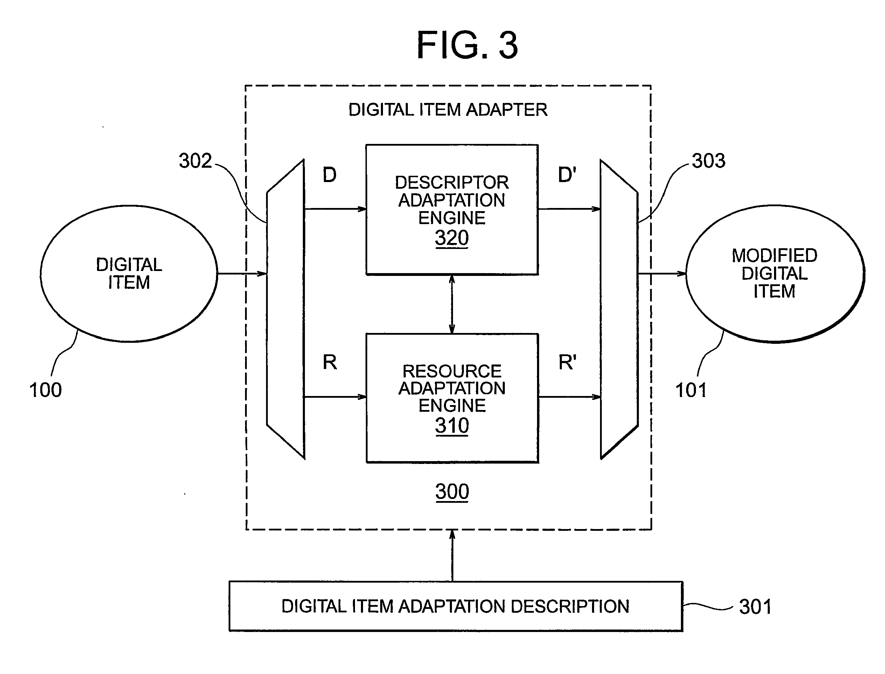

Figure 3 illustrates the concept of digital item adaptation according to this invention. A digital item 100 is passed through a digital item adapter 300 to yield a modified digital item 101. At the input to the adapter 300, the digital item is parsed 302 to extract the resources 110 and associated descriptors 120 using the structure 130 and, for example, an MPEG-21 DID parser.

The resources (R) of the digital item are routed and subject to a resource adaptation engine 310 to produce adapted resources (R'), while the descriptors (D) of the digital item are routed and subject to a descriptor adaptation engine 320 to produce modified descriptors (D') that are consistent with the adapted resources. When these are combined 303, they form the modified digital item 101. The modified digital item can now be distributed in a manner that is consistent with external constraints.

The digital item adapter 300 accepts a digital item adaptation description 301 to assist in the adaptation process. The adaptation descriptions differ from the descriptors 120 within the digital item 100 in that they do not describe the *internal* resources 110 within the digital item, but rather *external resources* or environmental factors that are not directly associated with the resources of the digital item 100.

### Digital Item Adaptation Descriptions

There are a variety of factors of external resources that affect the operation of the resource adaptation engine 310. These factors include terminal or output device capabilities, physical network conditions, delivery/transport capabilities, user preferences, and natural environment characteristics. Any of these factors can be parameters of the digital item adaptation description 301.

Terminal capabilities include hardware properties, such as processor speed and memory capacity, software properties such as operating system, display properties such as screen resolution, and device profiles, which may indicate the media formats supported, e.g., MPEG profile/level.

Physical network conditions specify delay characteristics, such as end-to-end delay, one-way delay, or delay variation, error characteristics, such as bit-error rate, packet loss or burstiness, and bandwidth characteristics, such as amount of available bandwidth or bandwidth variation.

Delivery capabilities specify the type of transport protocols supported, such as MPEG-2 Systems, TCP/IP and RTP, as well as the types of connections supported, e.g., broadcast, unicast, multicast.

User preferences include filtering and search preferences, browsing preferences, display preferences and QoS preferences, as well as demographic information, such as gender and age.

Natural environment characteristics include location, such as GPS coordinates and locale, the type of location, e.g., indoor, outdoor, home or office, the velocity of a user output device or terminal, as well as the illumination properties affecting a user device or terminal.

In addition to the above, the digital item adaptation descriptions may also specify service capabilities. Service capabilities include a particular users role, e.g., content creator, service provider, rights owner, billing party or end consumer, as well as the type of service that particular user provides, such as content creation, rights negotiation, billing, content adaptation and transcoding, use of the network and content consumption. Assuming that a particular user is the right owner or content creator, digital item adaptation descriptions may also include the permissible types of adaptations that are allowed, e.g., the bit-rate should not be less that 2Mb/sec or spatial resolution of a video should not be reduced by more than a factor of two.

### Details of Digital Item Adaptation

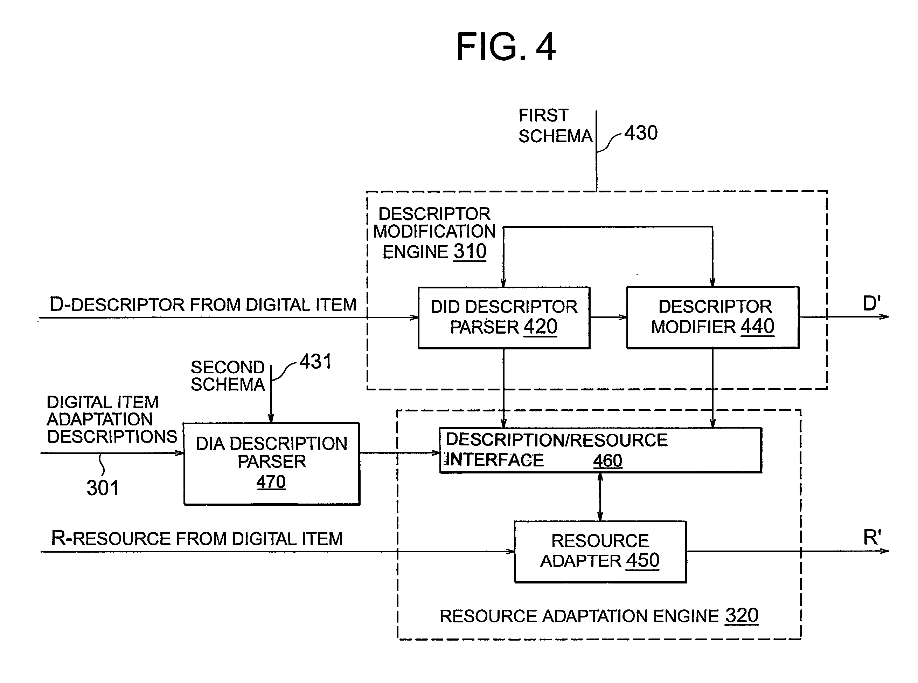

Figure 4 shows the details of digital item adaptation. This figure illustrates the data flow and control between the description adaptation engine and resource adaptation engine. It is assumed that the MPEG-21 DID parser 302 has already parsed the DID and routed the description part, which resides in the statement element of the DID, and the resource, which is specified by the resource element, to their respective engines 310 and 320. It should be noted that in a distributed environment, these engines are not necessarily co-located, i.e., they may be physically located in different parts of the world and connected via a network. It should also be noted, that a digital item may be adapted several times as it travels from a source to a destination device such as a user's terminal device.

The description document from the DID is first subject to a DID descriptor parser 420 to yield the set of descriptors that are associated to the resources. A first schema 430, or set of rules according to which the document was created, is needed for this operation. This set of descriptors, including fields and values, is then passed to a interface 460. During the parsing process, a Document Object Model (DOM) is created, see the World Wide Web Consortium (W3C) specification. The DOM essentially is a data structure that defines the parent-child relationships of the various fields and values within the document. The DOM is passed to a DID descriptor modifier 440 to later change the values of the fields that must be modified due to the adaptation actions of a resource adapter 450.

The digital item adaptation description 301 is parsed by a DIA description parser 470 to yield a set of descriptions related to external factors or external resources. Similarly, the fields and values from this set of descriptions are passed to the description/resource interface 460. As with the DID description parser, a second schema 431 is needed for this parsing operation as well.

The function of the descriptor interface 460 is to collect the descriptors (D) of the various resources (R), interpret the fields and values and convey the relevant information to the resource adapter 450. The description/resource interface 460 is aware of the resource adapter capabilities. Therefore, the interface 460 filters and conveys only descriptor parameters that can be used by the resource adapter 450. This can be implemented through a pre-defined application program interface (API). Based on the action of the resource adapter 450, an adapted resource (R'), as well as a corresponding description is sent back to the interface 460. Because the system is dynamic, updates to and from the interface 460 can be made periodically.

The interface 460 in turn takes the modified descriptor values as specified by the resource adapter 450 and conveys the changes, again including fields and values, to the DID descriptor modifier 440. Using these updated values and the DOM created by the DID descriptor parser 420, the modified document to be included in the modified DID is created.

### Resource Adapter

As described above, the operation of the resource adapter 450 is affected not only by digital item adaptation description 301, but also by the descriptors of the resource that are included as part of the DID. Such descriptions include transcoding hints as specified in U.S. Patent Application Sn. 09/547,159, "Video transcoding using syntactic and semantic clues," filed on June 15, 1999, by Vetro et al., or ISO/IEC 15938-5:2001, "Information Technology - Multimedia Content Description Interface: Part 5 Multimedia Description Schemes."

There are a wide variety of resource adaptation engines that may be used with the present invention. For video transcoding, the resource adaptation engine 450 may consider bit rate reduction, see for example "Architectures for MPEG compressed bitstream scaling," IEEE Transactions on Circuits and Systems for Video Technology, April 1996 by Sun et al., and spatial resolution reduction, see for example, U.S. Patent Application Sn. 09/853,394, "Video Transcoder with Spatial Resolution Reduction," filed on May 11, 2001 by Vetro et al. Other types of adaptation may include a generation of video summaries, see for example U.S. Patent Application Sn. 09/845,009, "Method for summarizing a video using motion and color descriptors," filed on August 9, 2000 by Divakaran, et al., or changing the compression format, e.g., from MPEG-2 to MPEG-4.

This invention can use any known methods for resource adaptation. The specific abilities of the resource adaptation engine depend highly on the target application and target adaptation device.

### Digital Item Distribution

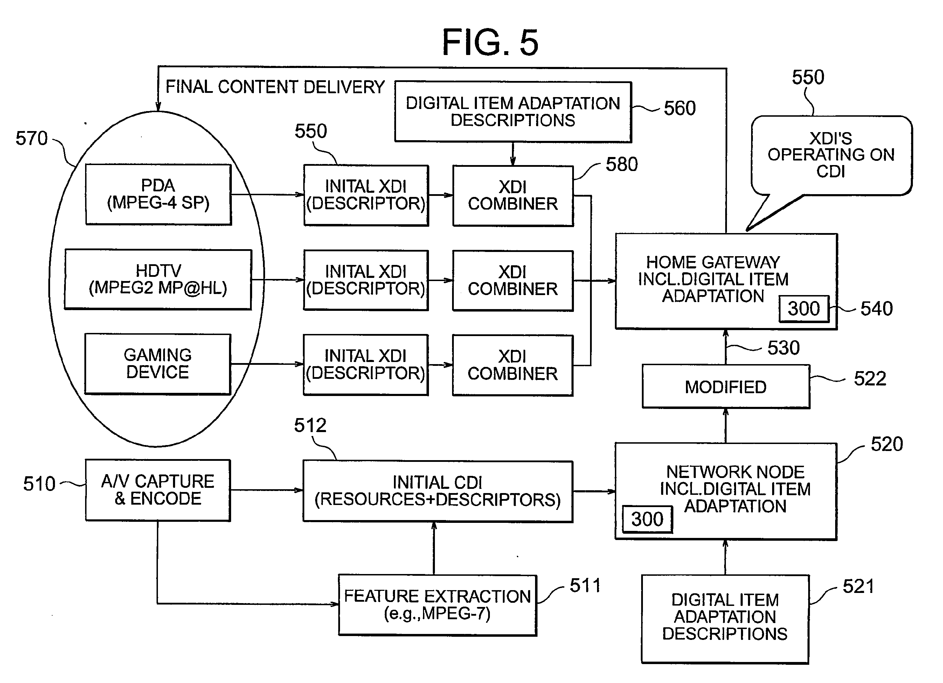

Figure 5 shows how digital items are generated, distributed, adapted and finally consumed. At first, audio-visual resources (multimedia content) are captured and encoded 510. The resources may then undergo a feature extraction 511 process to yield a set of descriptors for the resources. Based on the content of the resources and the descriptors, an initial digital item is created. In this example, we refer to this particular type of digital item that contains resources and corresponding descriptors of the resources a CDI 512.

In the distribution of the CDI over a heterogeneous network, it may come across a network node 520 that requires some adaptation of the digital item due to some external factors, e.g., available bandwidth, which would be specified by the digital item adaptation descriptions 521. This would initiate the digital item adaptation process 300 and a modified CDI 522 is produced.

As part of the intermediate content delivery chain 530, the modified CDI 522 may ultimately end up on a home server/gateway 540, where it would await a request for a final delivery to any number of different consumer device 570. In this example, we consider an HDTV supporting MPEG-2 MP@ML, a PDA supporting MPEG-4 Simple Profile at low spatial resolutions and bit-rates, and a gaming device that may only support particular graphics formats.

Each of these devices are capable of generating a description of themselves, which we will refer to as initial XDI 550. Assuming that the home server/gateway supports multiple types of connections, e.g., wireless, CATV, Ethernet, each XDI originating from a respective device may be further modified in combiners 580 by digital item adaptation descriptions 560 pertaining to, e.g., the network conditions. An XDI modifier would handle such modifications to the XDI. This modifier operates in a similar manner as the description adaptation engine 300, with the exception that input to the DID description modifier is based directly on digital item adaptation descriptions.

Upon reaching the home server/gateway and assuming that a request for a particular resource has been made, digital item adaptation would again be performed. In this case, the XDI serves as the digital item adaptation description and the adapted resource, or entire DID with resource included, can be transmitted to any of the terminal devices 570.
Although the invention has been described by way of examples of preferred embodiments, it is to be understood that various other adaptations and modifications can be made within the scope of the invention.

## Claims

1. A method for adapting a digital item (100) which is a structured digital object in networks and devices creating, transmitting and receiving multimedia contents within the MPEG-21 framework with a standard representation, identification and associated descriptors (120) of resources (110) including individual multimedia assets, said descriptors (120) including descriptive information about the internals of the resources (110), and a structure defining the relationships and associations among the resources (110) and descriptors (120), **characterized by** the steps:
adapting the at least one resource (110) according to a digital item adaptation description (301) which is related to resources external to the digital item (100) and includes parameters according to factors of external resources to produce an adapted resource;
modifying the associated descriptor (120) according to the digital item adaptation description (301) to produce a modified descriptor consistent with the adapted resource; and
arranging the adapted resource and the modified descriptor in an adapted digital item (101).

2. The method of claim 1 wherein the descriptor (120) is related to the resource (110) internal to the digital item (100), and the digital item adaptation description (301) is related to resources external to the digital item (100), and the modified digital item (101) is substantially consistent with the external resources.

3. The method of claim 2 wherein the external resources include a computer system for processing the modified digital item (101).

4. The method of claim 2 wherein the external resources include a network for transmitting the modified digital item (101).

5. The method of claim 2 wherein the external resources include user preferences.

6. The method of claim 2 wherein the external resources include a natural environment.

7. The method of claim 2 wherein the external resources include a user device for consuming the modified digital item (101).

8. The method of claim 1 further comprising:
parsing the digital item (100) using a digital item declaration parser to obtain the resource and the descriptor.

9. The method of claim 1 wherein the resource is adapted using a transcoder.

10. The method of claim 1 wherein the adapting summarizes the resource.

11. The method of claim 1 wherein the digital item adaptation description (301) is generated within a network used to distribute the digital item (100).

12. The method of claim 1 wherein the digital item adaptation description (301) is generated by a terminal device consuming the digital item (100).

13. The method of claim 1 wherein the digital item (100) includes a plurality of resources (110), and a plurality of associated descriptors (120).

14. The method of claim 1 wherein the resource (110) includes multimedia content.

15. The method of claim 1 further comprising:
coordinating the adapting and modifying via a descriptor/resource interface (460).

16. A system for adapting a digital item (100) which is a structured digital object in networks and devices creating, transmitting and receiving multimedia contents within the MPEG-21 framework with a standard representation, identification and associated descriptors (120) of resources (110) including individual multimedia assets, said descriptors (120) including descriptive information about the internals of the resources (110), and a structure defining the relationships and associations among the resources (110) and descriptors (120), **characterized by** the steps:
a parser (302) configured to separate at least one digital item (100) into a resource (110) and a descriptor (120);
a resource adaptation engine (310) configured to adapt the at least one resource (110) according to a digital item adaptation description (301) which is related to resources external to the digital item and includes parameters according to factors of external resources to produce an adapted resource;
a descriptor modification engine (320) configured to modify the associated descriptor (120) according to the digital item adaptation description (301) to produce a modified descriptor consistent with the adapted resource; and
a combiner (303) configured to arrange the adapted resource and the modified descriptor into an adapted digital item (101).

17. The method of claim 16 further comprising:
a descriptor/resource interface (460) connecting the resource adaptation engine (310) and the descriptor modification engine (320).

18. The system of claim 16 wherein the resource adaptation engine (310) includes a transcoder.

## Patentansprüche

1. Verfahren zum Anpassen einer digitalen Datengröße (100), die ein strukturiertes digitales Objekt in Netzwerken und Vorrichtungen ist, die Multimedieninhalte innerhalb des MPEG-21-Rahmenwerks mit einer Standarddarstellung, Identifikation und assoziierten Deskriptoren (120) von Ressourcen (110) enthaltend individuelle Multimediengüter schaffen, senden und empfangen, welche Deskriptoren (120) beschreibende Informationen über die Interna der Ressourcen (110) und eine Struktur, die die Beziehungen und Assoziationen unter den Ressourcen (110) und Deskriptoren (120) definieren, enthalten, **gekennzeichnet durch** die Schritte:
Anpassen der zumindest einen Ressource (110) gemäß einer Anpassungsbeschreibung (301) für eine digitale Datengröße, die auf für die digitale Datengröße (100) externe Ressourcen bezogen ist und Parameter gemäß Faktoren von externen Ressourcen zum Erzeugen einer angepassten Ressource enthält;
Modifizieren des assoziierten Deskriptors (120) gemäß der Anpassungsbeschreibung (301) für eine digitale Datengröße, um einen modifizierten Deskriptor zu erzeugen, der mit der angepassten Ressource konsistent ist; und
Anordnen der angepassten Ressource und des modifizierten Deskriptors in einer angepassten digitalen Datengröße (101).

2. Verfahren nach Anspruch 1, bei dem der Deskriptor (120) auf die für die digitale Datengröße (100) interne Ressource (110) bezogen ist und die Anpassungsbeschreibung (301) für die digitale Datengröße auf für die digitale Datengröße (100) externe Ressourcen bezogen ist, und die modifizierte digitale Datengröße (101) im wesentlichen konsistent mit den externen Ressourcen ist.

3. Verfahren nach Anspruch 2, bei dem die externen Ressourcen ein Computersystem zum Verarbeiten der modifizierten digitalen Datengröße (101) enthalten.

4. Verfahren nach Anspruch 2, bei dem die externen Ressourcen ein Netzwerk zum Übertragen der modifizierten digitalen Datengröße (101) enthalten.

5. Verfahren nach Anspruch 2, bei dem die externen Ressourcen Benutzerbevorzugungen enthalten.

6. Verfahren nach Anspruch 2, bei dem die externen Ressourcen ein natürliches Umfeld enthalten.

7. Verfahren nach Anspruch 2, bei dem die externen Ressourcen eine Benutzervorrichtung zum Verbrauchen der modifizierten digitalen Datengröße (101) enthalten.

8. Verfahren nach Anspruch 1, weiterhin aufweisend: Analysieren der digitalen Datengröße (100) unter Verwendung eines Deklarationsparsers für die digitale Datengröße, um die Ressource und den Deskriptor zu erhalten.

9. Verfahren nach Anspruch 1, bei dem die Ressource unter Verwendung eines Transcoders angepasst wird.

10. Verfahren nach Anspruch 1, bei dem das Anpassen die Ressource zusammenfasst.

11. Verfahren nach Anspruch 1, bei dem die Anpassungsbeschreibung (301) für die digitale Datengröße innerhalb eines zum Verteilen der digitalen Datengröße (100) verwendeten Netzwerks erzeugt wird.

12. Verfahren nach Anspruch 1, bei dem die Anpassungsbeschreibung für die digitale Datengröße durch eine die digitale Datengröße (100) verbrauchende Endgerätevorrichtung erzeugt wird.

13. Verfahren nach Anspruch 1, bei dem die digitale Datengröße (100) mehrere Ressourcen (110) und mehrere assoziierte Deskriptoren (120) enthält.

14. Verfahren nach Anspruch 1, bei dem die Ressourcen (110) Multimedieninhalt enthält.

15. Verfahren nach Anspruch 1, weiterhin aufweisend:
Koordinieren des Anpassens und Modifizierens über eine Deskriptoren/Ressourcen-Schnittstelle (460.

16. System zum Anpassen einer digitalen Datengröße (100), die ein strukturiertes digitales Objekt in Netzwerken und Vorrichtungen ist, die Multimedieninhalte innerhalb des MPEG-21-Rahmenwerks mit einer Standarddarstellung, Identifikation und assoziierten Deskriptoren (120) von Ressourcen (110) enthaltend individuelle Multimediengüter schaffen, senden und empfangen, welche Deskriptoren (120) beschreibende Informationen über die Interna der Ressourcen (110) und eine Struktur, die die Beziehungen und Assoziationen unter den Ressourcen (110) und Deskriptoren (120) definieren, enthalten, **gekennzeichnet durch** die Schritte:
einen Parser (302), der zum Trennen zumindest einer digitalen Datengröße (100) in eine Ressource (110) und einen Deskriptor (120) ausgebildet ist;
einen Ressourcenanpassungsprozessor (310), der zum Anpassen der zumindest einen Ressource (110) gemäß einer Anpassungsbeschreibung (301) für eine digitale Datengröße, die auf für die digitale Datengröße externe Ressourcen bezogen ist und Parameter gemäß Faktoren von externen Ressourcen enthält, um eine angepasste Ressource zu erzeugen, ausgebildet ist;
einen Deskriptorenmodifikationsprozessor (320), der zum Modifizieren des assoziierten Deskriptors (120) gemäß der Anpassungsbeschreibung (301) für die digitalen Datengröße ausgebildet ist, um einen modifizierten Deskriptor, der mit der angepassten Ressource konsistent ist, zu erzeugen; und
einen Kombinierer (303), der ausgebildet ist zum Anordnen der angepassten Ressource und des modifizierten Deskriptors in einer angepassten digitalen Datengröße (101).

17. Verfahren nach Anspruch 16, weiterhin aufweisend:
eine Deskriptoren/Ressourcen-Schnittstelle (460), die den Ressourcenanpassungsprozessor (310) und den Deskriptorenmodifikationsprozessor (320) verbindet.

18. System nach Anspruch 16, bei dem der Ressourcenanpassungsprozessor (310) einen Transcoder enthält.

## Revendications

1. Procédé pour adapter un élément numérique (100) qui est un objet numérique structuré dans des réseaux et des dispositifs créant, transmettant et recevant des contenus multimédia dans le cadre MPEG-21 avec une représentation, une identification et des descripteurs associés normalisés (120) de ressources (110) incluant des contenus multimédia individuels, lesdits descripteurs (120) incluant des informations descriptives sur les éléments internes des ressources (110) et une structure définissant les relations et associations entre les ressources (110) et les descripteurs (120), **caractérisé par** les étapes consistant à :
adapter au moins une ressource (110) selon une description d'adaptation d'élément numérique (301) associée à des ressources externes à l'élément numérique (100) et qui inclut des paramètres en fonction de facteurs de ressources externes pour produire une ressource adaptée ;
modifier le descripteur associé (120) selon la description d'adaptation d'élément numérique (301) pour produire un descripteur modifié cohérent avec la ressource adaptée ; et
agencer la ressource adaptée et le descripteur modifié dans un élément numérique adapté (101).

2. Procédé selon la revendication 1 dans lequel le descripteur (120) est associé à la ressource (110) interne à l'élément numérique (100) et la description d'adaptation d'élément numérique (301) est associée à des ressources externes à l'élément numérique (100) et l'élément numérique modifié (101) est en grande partie compatible avec les ressources externes.

3. Procédé selon la revendication 2 dans lequel les ressources externes incluent un système informatique pour traiter l'élément numérique modifié (101).

4. Procédé selon la revendication 2 dans lequel les ressources externes incluent un réseau pour transmettre l'élément numérique modifié (101).

5. Procédé selon la revendication 2 dans lequel les ressources externes incluent des préférences utilisateur.

6. Procédé selon la revendication 2 dans lequel les ressources externes incluent un environnement naturel.

7. Procédé selon la revendication 2 dans lequel les ressources externes incluent un dispositif utilisateur pour consommer l'élément numérique modifié (101).

8. Procédé selon la revendication 1 comprenant en outre : un analyseur syntaxique de l'élément numérique (100) en utilisant un analyseur syntaxique de déclaration d'élément numérique pour obtenir la ressource et le descripteur.

9. Procédé selon la revendication 1 dans lequel la ressource est adaptée à l'aide d'un transcodeur.

10. Procédé selon la revendication 1 dans lequel l'adaptation résume la ressource.

11. Procédé selon la revendication 1 dans lequel la description d'adaptation d'élément numérique (301) est générée dans un réseau utilisé pour distribuer l'élément numérique (100).

12. Procédé selon la revendication 1 dans lequel la description d'adaptation d'élément numérique (301) est générée par un terminal consommant l'élément numérique (100).

13. Procédé selon la revendication 1 dans lequel l'élément numérique (100) comprend une pluralité de ressources (110) et une pluralité de descripteurs associés (120).

14. Procédé selon la revendication 1 dans lequel la ressource (110) inclut un contenu multimédia.

15. Procédé selon la revendication 1 comprenant en outre :
une coordination de l'adaptation et de la modification via une interface descripteur/ressource (460).

16. Système pour adapter un élément numérique (100) qui est un objet numérique structuré dans des réseaux et des dispositifs créant, transmettant et recevant des contenus multimédia dans le cadre MPEG-21 avec une représentation, une identification et des descripteurs associés normalisés (120) de ressources (110) incluant des contenus multimédia individuels, lesdits descripteurs (120) incluant des informations descriptives sur les éléments internes des ressources (110) et une structure définissant les relations et les associations entre les ressources (110) et les descripteurs (120), **caractérisé par** en ce qu'il comprend :
un analyseur syntaxique (302) configuré pour séparer au moins un élément numérique (100) en une ressource (110) et un descripteur (120) ;
un moteur d'adaptation de ressource (310) configuré pour adapter au moins une ressource (110) selon une description d'adaptation d'élément numérique (301) associée aux ressources externes à l'élément numérique (100) et qui inclut des paramètres en fonction de facteurs de ressources externes pour produire une ressource adaptée ;
un moteur de modification de descripteur (320) configuré pour modifier le descripteur associé (120) selon la description d'adaptation d'élément numérique (301) pour produire un descripteur modifié compatible avec la ressource adaptée ; et un combinateur (303) configuré pour agencer la ressource adaptée et le descripteur modifié en un élément numérique adapté (101).

17. Système selon de la revendication 16 comprenant en outre :
une interface descripteur/ressource (460) connectant le moteur d'adaptation de ressource (310) et le moteur de modification de descripteur (320).

18. Système selon la revendication 16 dans lequel le moteur d'adaptation de ressource (310) inclut un transcodeur.
